# EUROPEAN PATENT APPLICATION

(11) **EP 4 707 051 A1**
(43) Date of publication of application: **11.03.2026**
(21) Application number: 25200479.1
(22) Date of filing: 05.09.2025
(51) Int. Cl.: B60L 53/30, B60L 58/26

(54) **CHARGING PILE AND LIQUID COOLING DEVICE**

(30) Priority: 05.09.2024 CN 202411247474
(71) Applicant: Huawei Digital Power Technologies Co., Ltd., Shenzhen, Guangdong 518043 (CN)
(72) Inventor: SONG, Jinliang, Shenzhen, Guangdong, 518043 (CN); HU, Minggui, Shenzhen, Guangdong, 518043 (CN)
(74) Representative: Maiwald GmbH

(57) **Abstract**

This application provides a charging pile (510) and a liquid cooling device (520). The charging pile (510) includes a charging connector (511), a coolant storage tank (521), a first heat exchanger (522), a coolant discharge channel (5231), a coolant return channel (5232), a heat dissipation channel (M1), and a coolant supplement channel (M2). The charging connector (511) is configured to output electric energy to an electric vehicle (400). The charging pile (510) is configured to: when the coolant discharge channel (5231) and the coolant return channel (5232) are connected to the electric vehicle (400), and a heat dissipation request packet sent by the electric vehicle is received, connect the heat dissipation channel (M1). The heat dissipation channel (M1) is configured to deliver, to the electric vehicle (400) through the coolant discharge channel (5231), a coolant flowing out of the first heat exchanger (522), and deliver, to the first heat exchanger (522) through the coolant return channel (5232), a coolant flowing out of the electric vehicle (400), so that the charging pile (510) dissipates heat for a power battery (411) of the electric vehicle (400). The charging pile (510) is further configured to: when the coolant discharge channel (5231) is connected to the electric vehicle (400), and a coolant supplement request packet sent by the electric vehicle is received, connect the coolant supplement channel (M2). The coolant supplement channel (M2) is configured to deliver, to the electric vehicle (400) through the coolant discharge channel (5231), a coolant flowing out of the coolant storage tank (521), so that the charging pile (510) supplements a coolant storage tank (430) of the electric vehicle with the coolant.

## Description

### TECHNICAL FIELD

This application relates to the field of charging, and more specifically, to a charging pile and a liquid cooling device.

### BACKGROUND

With acceleration of a process of the carbon peaking and carbon neutrality strategy and increasing popularity of electric vehicles, more cities start to develop into ultra-fast charging cities. This promotes development of charging devices toward high-power ultra-fast charging devices, to achieve "one kilometer per second" quick energy supplementation for the electric vehicles, and achieve brand-new charging experience of "Charge Up While You Coffee Up".

However, as charging power provided by the charging devices to power batteries of the electric vehicles continuously increases, heat generated by the power batteries increases greatly. Consequently, temperatures of the power batteries continuously increase during high-power charging of the electric vehicles. Excessively high temperatures are prone to reducing efficiency and safety of the power batteries, which affects normal high-power fast charging of the electric vehicles.

### SUMMARY

This application provides a charging pile and a liquid cooling device. The charging pile can provide a coolant to an electric vehicle when receiving a heat dissipation request packet of the electric vehicle, to dissipate heat for a power battery of the electric vehicle, and can provide a coolant to the electric vehicle when receiving a coolant supplement request of the electric vehicle, to supplement a coolant storage tank of the electric vehicle with the coolant. In this way, a heat dissipation requirement of the electric vehicle during high-power fast charging can be met, to improve efficiency and safety of charging the electric vehicle by the charging pile. In addition, timeliness of supplementing the coolant storage tank of the electric vehicle with a coolant can be improved, to reduce cases in which the coolant storage tank is supplemented with a coolant at a specified location, so that user experience is improved.

According to a first aspect, a charging pile is provided, where the charging pile includes a charging connector, a coolant storage tank, a first heat exchanger, a coolant discharge channel, a coolant return channel, a heat dissipation channel, and a coolant supplement channel, and the first heat exchanger includes a coolant channel. The charging connector is configured to output electric energy to an electric vehicle, the coolant discharge channel is configured to communicate with a coolant injection port of the electric vehicle, and the coolant return channel is configured to communicate with a coolant outlet of the electric vehicle. The charging pile is configured to: when the coolant discharge channel communicates with the coolant injection port of the electric vehicle, the coolant return channel communicates with the coolant outlet of the electric vehicle, and a heat dissipation request packet sent by the electric vehicle is received, connect the heat dissipation channel. The heat dissipation channel is configured to deliver, to the electric vehicle through the coolant discharge channel, a coolant flowing out of the coolant channel, and deliver, to the coolant channel through the coolant return channel, a coolant flowing out of the electric vehicle. The heat dissipation request packet includes at least one of the following packets: a packet indicating the charging pile to dissipate heat for the electric vehicle, a packet indicating a flow rate that is required by the electric vehicle and that is of a coolant of the charging pile, or a packet indicating a temperature that is required by the electric vehicle and that is of the coolant of the charging pile. The charging pile is further configured to: when the coolant discharge channel communicates with the coolant injection port of the electric vehicle, and a coolant supplement request packet sent by the electric vehicle is received, connect the coolant supplement channel. The coolant supplement channel is configured to deliver, to the electric vehicle through the coolant discharge channel, a coolant flowing out of the coolant storage tank. The coolant supplement request packet includes at least one of the following packets: a packet indicating the charging pile to supplement the electric vehicle with a coolant, or a packet indicating a capacity that is required by the electric vehicle and that is of the coolant of the charging pile.

In the charging pile provided in this embodiment of this application, the coolant discharge channel and the coolant return channel are connected to the electric vehicle, and the heat dissipation channel is connected when the heat dissipation request packet sent by the electric vehicle is received, so that the coolant in the charging pile can circulate between the coolant channel of the first heat exchanger and the electric vehicle. In this way, the charging pile dissipates heat for a power battery of the electric vehicle. This helps meet a heat dissipation requirement of the power battery during high-power fast charging, to improve efficiency and safety of charging the electric vehicle by the charging pile, so that it can be ensured that the charging pile normally performs high-power fast charging on the electric vehicle.

In addition, the coolant discharge channel is connected to the electric vehicle, and the coolant supplement channel is connected when the coolant supplement request packet sent by the electric vehicle is received, so that the coolant in the coolant storage tank of the charging pile can flow into the electric vehicle, to supplement a coolant storage tank of the electric vehicle with the coolant. In this way, timeliness of supplementing the coolant storage tank of the electric vehicle with a coolant can be improved, to prevent a case in which the coolant in the coolant storage tank of the electric vehicle is insufficient. In addition, cases in which the coolant storage tank of the electric vehicle is supplemented with a coolant at a specified location are reduced, to simplify a coolant supplementation process of the coolant storage tank of the electric vehicle, so that user experience is improved.

In an embodiment of this application, a coolant outlet of the coolant channel is connected to the coolant discharge channel through the coolant storage tank, where a coolant inlet of the coolant storage tank is connected to the coolant outlet of the coolant channel, and a coolant outlet of the coolant storage tank is connected to the coolant discharge channel to form the coolant supplement channel. Alternatively, the coolant return channel is connected to a coolant inlet of the coolant channel through the coolant storage tank, where a coolant inlet of the coolant storage tank is connected to the coolant return channel, a coolant outlet of the coolant storage tank is connected to the coolant inlet of the coolant channel, and the coolant outlet of the coolant storage tank is connected to the coolant discharge channel through the coolant channel to form the coolant supplement channel.

Based on the foregoing design, the coolant storage tank may be connected in series to the heat dissipation channel between the coolant discharge channel, the coolant channel of the first heat exchanger, and the coolant return channel, so that the coolant storage tank is used as a water supply water tank and a water return water tank of the heat dissipation channel. In this way, when the heat dissipation channel is connected, the coolant stored in the coolant storage tank may circulate between the coolant storage tank, the coolant channel, and the electric vehicle through the coolant outlet of the coolant storage tank and the coolant inlet of the coolant storage tank, so that the first heat exchanger dissipates heat for the power battery by using the coolant provided by the coolant storage tank.

In addition, the coolant storage tank may directly output the coolant to the coolant discharge channel through the provided coolant outlet, to supplement the coolant storage tank of the electric vehicle with the coolant. In other words, a part of the heat dissipation channel may be used as the coolant supplement channel. In this way, when the coolant storage tank does not need to be separately provided with a coolant discharge port to be connected to the coolant discharge channel, the charging pile can supplement the coolant storage tank of the electric vehicle with the coolant. This helps reduce complexity of channel design in the charging pile.

In an embodiment of this application, the charging pile includes two two-way valves. When the coolant outlet of the coolant channel is connected to the coolant discharge channel through the coolant storage tank, one of the two-way valves is configured to connect a channel between the coolant outlet of the coolant storage tank and the coolant discharge channel, and the other two-way valve is configured to connect a channel between the coolant return channel and the coolant inlet of the coolant channel. Alternatively, when the coolant return channel is connected to the coolant inlet of the coolant channel through the coolant storage tank, the one of the two-way valves is configured to connect a channel between the coolant outlet of the coolant channel and the coolant discharge channel, and the other two-way valve is configured to connect a channel between the coolant return channel and the coolant inlet of the coolant storage tank.

Based on the foregoing design, a connected/disconnected state between two valve ports in each two-way valve may be controlled, so that the heat dissipation channel between the coolant discharge channel, the coolant channel, and the coolant return channel is connected, or the coolant supplement channel between the coolant outlet of the coolant storage tank and the coolant discharge channel is connected. In this way, a heat dissipation requirement or a coolant supplementation requirement of the electric vehicle can be met.

In an embodiment of this application, the charging pile further includes a compressor, an expansion valve, and a second heat exchanger, and the first heat exchanger further includes a refrigerant channel. The coolant outlet of the coolant channel is connected to the coolant discharge channel through the coolant storage tank, the compressor, the refrigerant channel, the expansion valve, and the second heat exchanger are sequentially connected, and the refrigerant channel is configured to perform heat exchange with the coolant channel. The charging pile is further configured to: when receiving the coolant supplement request packet, control the compressor to stop working.

Based on the foregoing design, a refrigerant loop that includes the compressor, the refrigerant channel of the first heat exchanger, the expansion valve, and the second heat exchanger may be used to cool the coolant in the coolant channel of the first heat exchanger, and the cooled coolant may flow into the coolant storage tank in advance for storage. In other words, the coolant storage tank may be used as a cooling storage water tank of the heat dissipation channel. When heat of the power battery of the electric vehicle needs to be dissipated, the coolant with a low temperature stored in the coolant storage tank may quickly flow into the electric vehicle through the coolant discharge channel, to improve efficiency of dissipating heat for the power battery by the charging pile. In addition, when the charging pile receives the coolant supplement request packet of the electric vehicle, because the coolant with a low temperature in the coolant storage tank may directly flow into the electric vehicle without passing through the coolant channel, the compressor may be turned off, to reduce energy consumption of the charging pile.

In an embodiment of this application, the charging pile further includes a three-way valve, and a coolant discharge port of the coolant storage tank is connected to the coolant discharge channel through the three-way valve to form the coolant supplement channel. The three-way valve is configured to connect a channel between a coolant outlet of the coolant channel and the coolant discharge channel, or the three-way valve is configured to connect a channel between the coolant discharge port of the coolant storage tank and the coolant discharge channel.

Based on the foregoing design, the coolant storage tank and the first heat exchanger are separately connected to the coolant discharge channel through the three-way valve. This helps ensure that supplementing the electric vehicle with a coolant by the coolant storage tank and dissipating heat for the electric vehicle by the first heat exchanger are separately performed, to improve reliability of heat dissipation and coolant supplementation performed by the charging pile on the electric vehicle. In addition, because the coolant storage tank and the first heat exchanger are separately disposed, when the coolant storage tank supplements the electric vehicle with the coolant, the compressor configured to cool the coolant flowing in the first heat exchanger, a water pump configured to drive the coolant to flow in the first heat exchanger, and the like in the charging pile may be in a shutdown state. This helps reduce energy consumption of the charging pile.

In an embodiment of this application, the charging pile further includes a compressor, an expansion valve, and a second heat exchanger, and the first heat exchanger further includes a refrigerant channel. The compressor, the refrigerant channel, the expansion valve, and the second heat exchanger are sequentially connected, and the refrigerant channel is configured to perform heat exchange with the coolant channel. The charging pile is further configured to: when receiving the coolant supplement request packet, control the compressor to stop working.

Based on the foregoing design, a refrigerant loop that includes the compressor, the refrigerant channel of the first heat exchanger, the expansion valve, and the second heat exchanger may be used to cool the coolant in the coolant channel of the first heat exchanger, and the cooled coolant may flow into the electric vehicle through the coolant discharge channel, so that the first heat exchanger dissipates heat for the power battery of the electric vehicle. In addition, when the charging pile receives the coolant supplement request packet of the electric vehicle, because the coolant storage tank may separately supplement the electric vehicle with the coolant, the compressor may be turned off, to reduce energy consumption of the charging pile.

In an embodiment of this application, the charging pile is further configured to: when the heat dissipation channel is connected, output electric energy to the electric vehicle by using the charging connector; and disconnect the heat dissipation channel after the charging connector finishes outputting electric energy to the electric vehicle.

In the foregoing technical solution, when the heat dissipation channel is connected, the charging connector charges the power battery of the electric vehicle, so that reliability of heat dissipation performed by the charging pile on the power battery in a charging state through the heat dissipation channel can be improved. This helps meet a heat dissipation requirement of the power battery during high-power fast charging. When the charging pile finishes charging the electric vehicle, the heat dissipation channel is disconnected, to prevent the coolant in the heat dissipation channel from leaking from the coolant discharge channel or the coolant return channel when the coolant discharge channel and the coolant return channel are disconnected from the electric vehicle.

According to a second aspect, a liquid cooling device is provided, where the liquid cooling device includes a coolant storage tank, a first heat exchanger, a coolant discharge channel, a coolant return channel, a heat dissipation channel, and a coolant supplement channel, and the first heat exchanger includes a coolant channel. The coolant discharge channel is configured to communicate with a coolant injection port of the electric vehicle, and the coolant return channel is configured to communicate with a coolant outlet of the electric vehicle. The liquid cooling device is configured to: when the coolant discharge channel communicates with the coolant injection port of the electric vehicle, the coolant return channel communicates with the coolant outlet of the electric vehicle, and a heat dissipation request packet sent by the electric vehicle is received, connect the heat dissipation channel. The heat dissipation channel is configured to deliver, to the electric vehicle through the coolant discharge channel, a coolant flowing out of the coolant channel, and deliver, to the coolant channel through the coolant return channel, a coolant flowing out of the electric vehicle. The heat dissipation request packet includes at least one of the following packets: a packet indicating the liquid cooling device to dissipate heat for the electric vehicle, a packet indicating a flow rate, required by the electric vehicle, of a coolant of the liquid cooling device, or a packet indicating a temperature, required by the electric vehicle, of the coolant of the liquid cooling device. The liquid cooling device is further configured to: when the coolant discharge channel communicates with the coolant injection port of the electric vehicle, and a coolant supplement request packet sent by the electric vehicle is received, connect the coolant supplement channel. The coolant supplement channel is configured to deliver, to the electric vehicle through the coolant discharge channel, a coolant flowing out of the coolant storage tank. The coolant supplement request packet includes at least one of the following packets: a packet indicating the liquid cooling device to supplement the electric vehicle with a coolant, or a packet indicating a capacity that is required by the electric vehicle and that is of the coolant of the liquid cooling device.

In an embodiment of this application, a coolant outlet of the coolant channel is connected to the coolant discharge channel through the coolant storage tank, where a coolant inlet of the coolant storage tank is connected to the coolant outlet of the coolant channel, and a coolant outlet of the coolant storage tank is connected to the coolant discharge channel to form the coolant supplement channel. Alternatively, the coolant return channel is connected to a coolant inlet of the coolant channel through the coolant storage tank, where a coolant inlet of the coolant storage tank is connected to the coolant return channel, a coolant outlet of the coolant storage tank is connected to the coolant inlet of the coolant channel, and the coolant outlet of the coolant storage tank is connected to the coolant discharge channel through the coolant channel to form the coolant supplement channel.

In an embodiment of this application, the liquid cooling device includes two two-way valves. When the coolant outlet of the coolant channel is connected to the coolant discharge channel through the coolant storage tank, one of the two-way valves is configured to connect a channel between the coolant outlet of the coolant storage tank and the coolant discharge channel, and the other two-way valve is configured to connect a channel between the coolant return channel and the coolant inlet of the coolant channel. Alternatively, when the coolant return channel is connected to the coolant inlet of the coolant channel through the coolant storage tank, the one of the two-way valves is configured to connect a channel between the coolant outlet of the coolant channel and the coolant discharge channel, and the other two-way valve is configured to connect a channel between the coolant return channel and the coolant inlet of the coolant storage tank.

In an embodiment of this application, the liquid cooling device further includes a compressor, an expansion valve, and a second heat exchanger, and the first heat exchanger further includes a refrigerant channel. The coolant outlet of the coolant channel is connected to the coolant discharge channel through the coolant storage tank, the compressor, the refrigerant channel, the expansion valve, and the second heat exchanger are sequentially connected, and the refrigerant channel is configured to perform heat exchange with the coolant channel. The liquid cooling device is further configured to: when receiving the coolant supplement request packet, control the compressor to stop working.

In an embodiment of this application, the liquid cooling device further includes a three-way valve, and a coolant discharge port of the coolant storage tank is connected to the coolant discharge channel through the three-way valve to form the coolant supplement channel. The three-way valve is configured to connect a channel between a coolant outlet of the coolant channel and the coolant discharge channel, or the three-way valve is configured to connect a channel between the coolant discharge port of the coolant storage tank and the coolant discharge channel.

In an embodiment of this application, the liquid cooling device further includes a compressor, an expansion valve, and a second heat exchanger, and the first heat exchanger further includes a refrigerant channel. The compressor, the refrigerant channel, the expansion valve, and the second heat exchanger are sequentially connected, and the refrigerant channel is configured to perform heat exchange with the coolant channel. The liquid cooling device is further configured to: when receiving the coolant supplement request packet, control the compressor to stop working.

### BRIEF DESCRIPTION OF DRAWINGS

FIG. 1 is a diagram of a charging system according to an embodiment of this application;
FIG. 2 is a diagram of a structure of a charging system according to an embodiment of this application;
FIG. 3 is a diagram of a specific structure of the charging system shown in FIG. 2 according to an embodiment of this application;
FIG. 4 is a diagram of a structure of another charging system according to an embodiment of this application;
FIG. 5 is a diagram of a specific structure of the charging system shown in FIG. 4 according to an embodiment of this application;
FIG. 6 is a diagram of a heat dissipation principle of a power battery in an electric vehicle shown in FIG. 5 according to an embodiment of this application;
FIG. 7 is a diagram of another heat dissipation principle of a power battery in an electric vehicle shown in FIG. 5 according to an embodiment of this application;
FIG. 8 is a diagram of a coolant supplementation principle of a coolant storage tank in an electric vehicle shown in FIG. 5 according to an embodiment of this application; and
FIG. 9 is a diagram of a structure of still another charging system according to an embodiment of this application.

### DESCRIPTION OF EMBODIMENTS

For ease of understanding embodiments of this application, the following descriptions are provided before embodiments of this application are described.

In descriptions of embodiments of this application, a connection may be an electrical connection, or may be a pipeline connection used for circulation of a coolant, a refrigerant, or the like. The electrical connection may be understood as that signal transmission is implemented between two electrical elements through a direct electrical connection or an indirect electrical connection. For example, that A is electrically connected to B may be understood as that A is directly electrically connected to B, or may be understood as that A is indirectly electrically connected to B through one or more other electrical elements.

In embodiments of this application, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In addition, in descriptions of embodiments of this application, "a plurality of" means two or more, and "at least one" and "one or more" mean one, two, or more.

In the descriptions of embodiments of this application, unless otherwise specified, "and/or" describes only an association relationship between associated objects and represents that three relationships may exist. For example, A and/or B may represent the following three cases: Only A exists, both A and B exist, and only B exists.

The following describes technical solutions of this application with reference to accompanying drawings.

First, for ease of understanding the technical solutions provided in embodiments of this application, an application scenario to which embodiments of this application are applicable is first described.

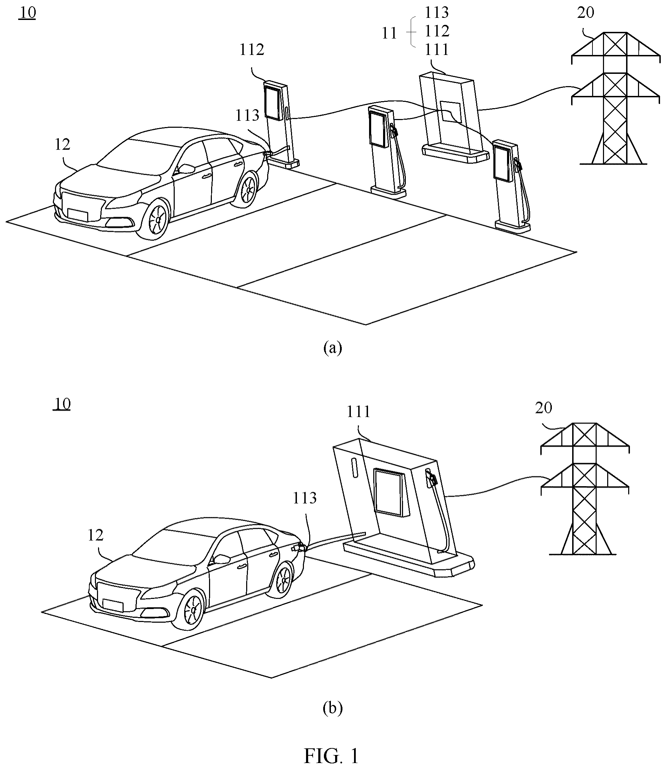

FIG. 1 is a diagram of a structure of a charging system 10 according to an embodiment of this application.

With reference to (a) and (b) in FIG. 1, the charging system 10 includes a charging device 11 and an electric vehicle 12. The charging device 11 is configured to: receive an alternating current output by a power grid 20, convert the alternating current into a stable direct current, and then deliver the stable direct current to the electric vehicle 12, to charge the electric vehicle 12. Alternatively, in some other embodiments, the electric vehicle 12 may reversely output electric energy to the power grid 20 by using the charging device 11.

In some embodiments, as shown in (a) in FIG. 1, the charging device 11 is a split charging device. Specifically, the charging device 11 includes a power unit 111, one or more charging terminals 112, and one or more chargers 113. The power unit 111 includes a plurality of charging modules (not shown in the figure), and output ends of the plurality of charging modules are connected to the one or more charging terminals 112. Each charging terminal 112 is connected to at least one of the one or more chargers 113, and each charger 113 is configured to connect to the electric vehicle 12. For example, an electric vehicle 12 may be connected to one charger 113, or an electric vehicle 12 may be connected to a plurality of chargers 113.

During specific implementation, the plurality of charging modules are configured to convert the alternating current output by the power grid 20 into the stable direct current, and then deliver the stable direct current to the charging terminal 112. The charging terminal 112 delivers the received direct current to the electric vehicle 12 through a connected charger 113.

It should be understood that, in this embodiment of this application, the plurality of charging modules include, for example, an alternating current-direct current (alternating current-direct current, AC-DC) conversion apparatus and a direct current-direct current (direct current-direct current, DC-DC) conversion apparatus. The AC-DC conversion apparatus is configured to convert the alternating current from the power grid 20 into a direct current and then output the direct current to the DC-DC conversion apparatus. The DC-DC conversion apparatus is configured to further convert the received direct current into the stable direct current that meets a charging requirement of the electric vehicle 12.

It should be further understood that, in this embodiment of this application, the charging terminal 112 includes a housing, a human-machine interaction interface, a charging control unit, a metering and billing unit, and the like, to perform information exchange, energy transmission, metering and billing, and the like with the electric vehicle 12.

For example, the charger 113 includes a charging cable and a charger head. One end of the charging cable is connected to the output ends of the plurality of charging modules, the other end of the charging cable is connected to the charger head, and the charger head is configured to connect to a charging interface of the electric vehicle 12. In this way, the direct current output by the plurality of charging modules is delivered to the electric vehicle 12 through the charger 113.

In this embodiment of this application, the electric vehicle 12 is a transportation means driven by electric energy to travel. The electric vehicle 12 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 11 is an integrated charging device. Specifically, the human-machine interaction interface, the charging control unit, the metering and billing unit, and the like in the charging terminal 112 may be disposed in the power unit 111 together with the plurality of charging modules, for example, in the housing of the power unit 111. In addition, the charger 113 is directly connected to the power unit 111. In this way, the charging device 11 may include only the power unit 111 and the one or more chargers 113 connected to the power unit 111, and does not include the charging terminal 112.

As described in the foregoing background, as the charging device 11 continuously evolves toward an ultra-fast charging device, charging power output by the plurality of charging modules to the electric vehicle 12 through the charger 113 continuously increases, so that high-power fast charging, for example, ultra-fast charging, is performed on a power battery of the electric vehicle 12. However, as the charging power continuously increases, heat generated by the power battery of the electric vehicle 12 increases greatly.

Although the electric vehicle 12 usually includes a vehicle-mounted thermal management system to dissipate heat for the power battery, the vehicle-mounted thermal management system not only needs to provide cooling required for heat dissipation for the power battery, but also needs to provide cooling required for heat dissipation for a motor, a passenger cabin, an air conditioner, and the like in the electric vehicle 12. Therefore, cooling that the vehicle-mounted thermal management system can provide for the power battery is excessively limited, and heat dissipation for the power battery by using the vehicle-mounted thermal management system dissipating heat alone cannot meet an increasing heat dissipation requirement of the power battery in a high-power fast charging process. Consequently, a temperature of the power battery continuously increases in the high-power fast charging process, and efficiency and safety of charging the power battery by the charging device 11 are reduced, which affects normal fast charging of the electric vehicle 12 by the charging device 11.

Therefore, heat dissipation for the power battery becomes a key problem faced during implementation of high-power fast charging of the electric vehicle 12.

In view of the foregoing content, an embodiment of this application provides a charging pile. The charging pile includes a charging connector, a coolant storage tank, a first heat exchanger, a coolant discharge channel, a coolant return channel, a heat dissipation channel, and a coolant supplement channel, and the first heat exchanger includes a coolant channel. The charging connector is configured to output electric energy to an electric vehicle, the coolant discharge channel is configured to communicate with a coolant injection port of the electric vehicle, and the coolant return channel is configured to communicate with a coolant outlet of the electric vehicle. The charging pile is configured to: when the coolant discharge channel communicates with the coolant injection port of the electric vehicle, the coolant return channel communicates with the coolant outlet of the electric vehicle, and a heat dissipation request packet sent by the electric vehicle is received, connect the heat dissipation channel. The heat dissipation channel is configured to deliver, to the electric vehicle through the coolant discharge channel, a coolant flowing out of the coolant channel, and deliver, to the coolant channel through the coolant return channel, a coolant flowing out of the electric vehicle. The heat dissipation request packet includes at least one of the following packets: a packet indicating the charging pile to dissipate heat for the electric vehicle, a packet indicating a flow rate that is required by the electric vehicle and that is of a coolant of the charging pile, or a packet indicating a temperature that is required by the electric vehicle and that is of the coolant of the charging pile. The charging pile is further configured to: when the coolant discharge channel communicates with the coolant injection port of the electric vehicle, and a coolant supplement request packet sent by the electric vehicle is received, connect the coolant supplement channel. The coolant supplement channel is configured to deliver, to the electric vehicle through the coolant discharge channel, a coolant flowing out of the coolant storage tank. The coolant supplement request packet includes at least one of the following packets: a packet indicating the charging pile to supplement the electric vehicle with a coolant, or a packet indicating a capacity that is required by the electric vehicle and that is of the coolant of the charging pile.

In the charging pile provided in this embodiment of this application, the coolant discharge channel and the coolant return channel are connected to the electric vehicle, and the heat dissipation channel is connected when the heat dissipation request packet sent by the electric vehicle is received, so that the coolant in the charging pile can circulate between the coolant channel of the first heat exchanger and the electric vehicle. In this way, the charging pile dissipates heat for a power battery of the electric vehicle. This helps meet a heat dissipation requirement of the power battery during high-power fast charging, to improve efficiency and safety of charging the electric vehicle by the charging pile, so that it can be ensured that the charging pile normally performs high-power fast charging on the electric vehicle.

In addition, the coolant discharge channel is connected to the electric vehicle, and the coolant supplement channel is connected when the coolant supplement request packet sent by the electric vehicle is received, so that the coolant in the coolant storage tank of the charging pile can flow into the electric vehicle, to supplement a coolant storage tank of the electric vehicle with the coolant. In this way, the charging pile can dissipate heat for the power battery of the electric vehicle and supplement the coolant storage tank with the coolant, so that timeliness of supplementing the coolant storage tank of the electric vehicle with the coolant can be improved, to prevent a case in which the coolant in the coolant storage tank of the electric vehicle is insufficient. In addition, cases in which the coolant storage tank of the electric vehicle is supplemented with a coolant at a specified location are reduced, to simplify a coolant supplementation process of the coolant storage tank, so that user experience is improved.

The following first describes, with reference to the accompanying drawings, a charging system in which the charging pile provided in embodiments of this application is used.

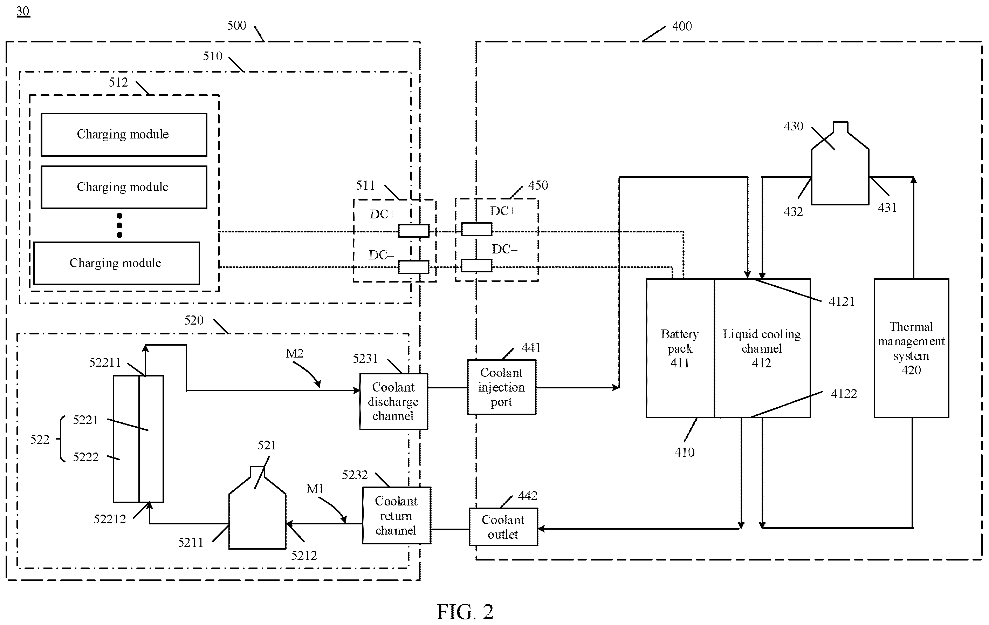

FIG. 2 is a diagram of a structure of a charging system 30 according to an embodiment of this application. It should be noted that, for ease of understanding, in FIG. 2, a dashed connection line represents a power transmission line, and a solid connection line represents a pipeline connection line used for circulation of a coolant, a refrigerant, and the like.

Refer to FIG. 2. The charging system 30 includes a charging pile 500 and an electric vehicle 400. The charging pile 500 includes a charging connector 511, the electric vehicle 400 includes a power battery 410, and the power battery 410 includes a battery pack 411. The charging connector 511 is configured to output electric energy to the electric vehicle 400, to charge the battery pack 411 in the power battery 410.

Specifically, as shown in FIG. 2, the charging pile 500 includes a charging device 510, the charging device 510 includes a plurality of charging modules 512 and a charger (not shown in the figure), and the charging connector 511 is disposed on the charger. A positive direct current plug DC+ and a negative direct current plug DC-in the charging connector 511 are correspondingly connected to a positive output end and a negative output end of the plurality of charging modules. Correspondingly, the electric vehicle 400 further includes a charging interface 450. A positive direct current socket DC+ and a negative direct current socket DC- in the charging interface 450 are configured to be correspondingly connected to the positive direct current plug DC+ and the negative direct current plug DC- in the charging connector 511, and the positive direct current socket DC+ and the negative direct current socket DC- in the charging interface 450 are further correspondingly connected to a positive input end and a negative input end of the power battery 410. When the charging connector 511 is connected to the charging interface 450, a direct current output by the plurality of charging modules 512 may be delivered to the battery pack 411 in the power battery 410 through the connected charging connector 511 and charging interface 450.

It should be understood that, in this embodiment of this application, the charging device 510 may be the split charging device shown in (a) in FIG. 1, or may be the integrated charging device shown in (b) in FIG. 1. For specific descriptions of the charging device 510, refer to the embodiment shown in FIG. 1. Details are not described herein again.

It should be further understood that, in this embodiment of this application, there may be one or more battery packs 411 in the power battery 410, and the plurality of battery packs 411 are connected in series and/or in parallel.

Still refer to FIG. 2. The charging pile 500 further includes a first coolant storage tank 521, a first heat exchanger 522, a coolant discharge channel 5231, a coolant return channel 5232, a heat dissipation channel M1, and a coolant supplement channel M2, and the first heat exchanger 522 includes a coolant channel 5221. The coolant discharge channel 5231 is configured to communicate with a coolant injection port 441 of the electric vehicle, and the coolant return channel 5232 is configured to communicate with a coolant outlet 442 of the electric vehicle. The heat dissipation channel M1 is configured to: deliver, to the electric vehicle 400 through the coolant discharge channel 5231, a coolant flowing out of the coolant channel 5221, and deliver through a channel, to the coolant channel 5221 through the coolant return channel 5232, a coolant flowing out of the electric vehicle 400. The coolant supplement channel M2 is configured to deliver, to the electric vehicle 400 through the coolant discharge channel 5231, a coolant flowing out of the first coolant storage tank 521.

Specifically, for the heat dissipation channel M1, the heat dissipation channel M1 may include a channel connected between the coolant discharge channel 5231 and a coolant inlet 52212 of the coolant channel, and a channel connected between a coolant outlet 52211 of the coolant channel and the coolant return channel 5232. In this way, when the coolant discharge channel 5231 communicates with the coolant injection port 441 of the electric vehicle, the coolant return channel 5232 communicates with the coolant outlet 442 of the electric vehicle, and the heat dissipation channel M1 is connected, a coolant output from the coolant outlet 52211 of the coolant channel may flow into the electric vehicle 400 through the coolant discharge channel 5231, to absorb heat generated by the power battery 410. The coolant that absorbs heat in the electric vehicle 400 may flow back to the coolant channel 5221 again through the coolant return channel 5232 to be cooled. Further, the coolant circulates between the coolant channel 5221 and the electric vehicle 400, so that the first heat exchanger 522 dissipates heat for the power battery 410.

In an example, the first heat exchanger 522 may further include a refrigerant channel 5222, where the refrigerant channel 5222 is configured to perform heat exchange with the coolant channel 5221, to cool the coolant flowing in the coolant channel 5221.

A specific process in which the refrigerant channel 5222 cools the coolant channel 5221 is described below, and details are not described herein again.

For example, a type of the coolant in the coolant channel 5221 is the same as a type of the coolant in the electric vehicle 400, for example, both are -35°C antifreeze. This helps reduce a risk of coolant deterioration and coolant pipeline blockage caused by that the type of the coolant in the coolant channel 5221 and the type of the coolant in the electric vehicle 400 are different.

For the coolant supplement channel M2, the coolant supplement channel M2 may include a channel for delivering the coolant from the first coolant storage tank 521 to the coolant discharge channel 5231.

For example, in some embodiments, as shown in FIG. 2, the coolant return channel 5232 is connected to the coolant inlet 52212 of the coolant channel through the first coolant storage tank 521. A coolant inlet 5212 of the first coolant storage tank is connected to the coolant return channel 5232, a coolant outlet 5211 of the first coolant storage tank is connected to the coolant inlet 52212 of the coolant channel, and the first coolant outlet 5211 of the first coolant storage tank is connected to the coolant discharge channel 5231 through the coolant channel 5221, to form the coolant supplement channel M2.

Therefore, the first coolant storage tank 521 may be connected in series to the heat dissipation channel M1 between the coolant discharge channel 5231 and the coolant return channel 5232, so that the coolant storage tank 521 is used as a water supply water tank and a water return water tank of the heat dissipation channel M1. In this way, when the heat dissipation channel M1 is connected, the coolant stored in the first coolant storage tank 521 may circulate between the first coolant storage tank, the coolant channel 5221, and the electric vehicle 400 through the first coolant outlet 5211 of the first coolant storage tank and the first coolant inlet 5212 of the first coolant storage tank, so that the first heat exchanger 522 dissipates heat for the power battery 410 by using the coolant provided by the first coolant storage tank 521.

In addition, the coolant supplement channel M2 may include a channel connected between the first coolant outlet 5211 of the first coolant storage tank and the coolant inlet 52212 of the coolant channel, and a channel connected between the coolant outlet 52211 of the coolant channel and the coolant discharge channel 5231. In other words, a part of the heat dissipation channel M1 is used as the coolant supplement channel M2. In this way, when the coolant discharge channel 5231 communicates with the coolant injection port 441 of the electric vehicle, and the coolant supplement channel M2 is connected, the coolant flowing out of the first coolant storage tank 521 may flow into the electric vehicle 400 through the coolant channel 5221 and the coolant discharge channel 5231, to supplement the coolant storage tank in the electric vehicle 400 with the coolant. In this way, when the first coolant storage tank 521 does not need to be separately provided with a coolant discharge port to be connected to the coolant discharge channel 5231, the charging pile 500 can supplement the coolant storage tank of the electric vehicle 400 with the coolant. This helps reduce complexity of channel design in the charging pile 500.

For example, a type of the coolant in the first coolant storage tank 521 is the same as the type of the coolant in the electric vehicle 400, for example, both are -35°C antifreeze. This helps reduce a risk of coolant deterioration and coolant pipeline blockage caused by that the type of the coolant in the first coolant storage tank 521 and the type of the coolant in the electric vehicle 400 are different.

It should be understood that during specific implementation, the first coolant storage tank 521 and the first heat exchanger 522 may be both disposed in the charging device 510, for example, both disposed in a box of a charging terminal of the charging device 510. Alternatively, as shown in FIG. 2, the charging pile 500 may further include a liquid cooling device 520 located outside the charging device 510, and the first coolant storage tank 521 and the first heat exchanger 522 are both disposed in the liquid cooling device 520. In addition, the coolant discharge channel 5231 and the coolant return channel 5232 may be located in the charger together with the charging connector 511. Alternatively, the liquid cooling device 520 further includes a liquid cooling connector, and both the coolant discharge channel 5231 and the coolant return channel 5232 are located in the liquid cooling connector.

For ease of description and understanding, this embodiment of this application is described by using an example in which the first coolant storage tank 521 and the first heat exchanger 522 are disposed in the liquid cooling device 520, and both the coolant discharge channel 5231 and the coolant return channel 5232 are located in the liquid cooling connector. In other words, this embodiment of this application is described by using an example in which both the heat dissipation channel M1 and the coolant supplement channel M2 are located in the liquid cooling device 520.

For example, the coolant discharge channel 5231 and the coolant return channel 5232 may separately be a channel in a plug having a bidirectional stop function.

Based on the foregoing analysis, during specific implementation, the charging pile 500 may connect one of the heat dissipation channel M1 and the coolant supplement channel M2, to meet a heat dissipation requirement of the power battery 410 in the electric vehicle 400, or meet a coolant supplementation requirement of the coolant storage tank in the electric vehicle 400.

For example, in some embodiments, the charging pile 500 is configured to: when the coolant discharge channel 5231 communicates with the coolant injection port 441 of the electric vehicle, the coolant return channel 5232 communicates with the coolant outlet 442 of the electric vehicle, and a heat dissipation request packet sent by the electric vehicle 400 is received, connect the heat dissipation channel M1. The heat dissipation request packet includes at least one of the following packets: a packet indicating the charging pile 500 to dissipate heat for the electric vehicle 400, a packet indicating a flow rate, required by the electric vehicle 400, of a coolant of the charging pile 500, or a packet indicating a temperature, required by the electric vehicle 400, of the coolant of the charging pile 500.

It should be understood that, in this embodiment of this application, the required flow rate of the coolant is a volume of the coolant provided by the charging pile 500 for the electric vehicle 400 in a unit of time.

Specifically, when the electric vehicle 400 needs to perform high-power fast charging through the charging pile 500, the charging interface 450, the coolant injection port 441, and the coolant outlet 442 of the electric vehicle 400 are correspondingly connected to the charging connector 511, the coolant discharge channel 5231, and the coolant return channel 5232 of the charging pile 500. Then, the electric vehicle 400 sends the heat dissipation request packet to the charging pile 500. In response to receiving the heat dissipation request packet, the charging pile 500 connects the heat dissipation channel M1. In this way, the coolant output by the coolant channel 5221 of the first heat exchanger 522 may circulate between the coolant channel 5221 and the electric vehicle 400 through the coolant discharge channel 5231 and the coolant return channel 5232, so that the first heat exchanger 522 dissipates heat for the power battery 410.

For example, the electric vehicle 400 may directly send the heat dissipation request packet to the charging device 510, and the charging device 510 controls the heat dissipation channel M1 in the liquid cooling device 520 to be connected. Alternatively, the electric vehicle 400 may directly send the heat dissipation request packet to a controller in the liquid cooling device 520, and the controller in the liquid cooling device 520 controls the heat dissipation channel M1 to be connected. Alternatively, the electric vehicle 400 may first send the heat dissipation request packet to the charging device 510, and then the charging device 510 forwards the heat dissipation request packet to the liquid cooling device 520.

In the foregoing technical solution, the charging pile 500 may connect the heat dissipation channel M1 when receiving the heat dissipation request packet sent by the electric vehicle 400, so that the coolant in the charging pile 500 circulates between the coolant channel 5221 of the first heat exchanger 522 and the electric vehicle 400 through the heat dissipation channel M1. In this way, the first heat exchanger 522 dissipates heat for the power battery 410. This helps meet a heat dissipation requirement of the power battery 410 during high-power fast charging, to improve efficiency and safety of charging the electric vehicle 400 by the charging pile 500, so that it can be ensured that the charging pile 500 normally performs high-power fast charging on the electric vehicle 400. In addition, the charging pile 500 may control, based on the required temperature and/or the required flow rate, indicated by the heat dissipation request packet, of the coolant, a temperature and/or a flow rate of the coolant delivered by the coolant discharge channel 5231 to the electric vehicle 400, so that a heat dissipation requirement of the power battery 410 during high-power fast charging can be better met.

It should be understood that, in some solutions, although a cooling capability of a thermal management system of the electric vehicle 400 is enhanced to meet a heat dissipation requirement of the power battery 410 during high-power fast charging, an entire vehicle cooling system of the electric vehicle 400 needs to be modified, causing a weight and a size of the entire vehicle to increase and causing energy consumption of the entire vehicle to increase. In addition, when the electric vehicle 400 performs low-power fast charging, a modified part of the entire vehicle cooling system is in an idle state, and utilization of the cooling system is low.

Therefore, in this embodiment of this application, the first heat exchanger 522 in the charging pile 500 is used to dissipate heat for the power battery 410 during high-power fast charging, so that a heat dissipation requirement of the power battery 410 during high-power fast charging can be met, and a degree of modification of the entire vehicle cooling system can be reduced. In this way, excessive increase in a weight and a size of the entire vehicle is avoided, to facilitate cost optimization of the electric vehicle 400.

In some other embodiments, the charging pile 500 is further configured to: when the coolant discharge channel 5231 communicates with the coolant injection port 441 of the electric vehicle, and a coolant supplement request packet sent by the electric vehicle 400 is received, connect the coolant supplement channel M2. The coolant supplement request packet includes at least one of the following packets: a packet indicating the charging pile 500 to supplement the electric vehicle 400 with a coolant, or a packet indicating a capacity, required by the electric vehicle 400, of the coolant of the charging pile 500.

It should be understood that, in this embodiment of this application, the required capacity of the coolant is a total volume of the coolant provided by the first coolant storage tank 521 for the electric vehicle 400.

Specifically, when the coolant storage tank in the electric vehicle 400 needs to be supplemented with the coolant, the electric vehicle 400 may send the coolant supplement request packet to the charging pile 500 when the coolant injection port 441 communicates with the coolant discharge channel 5231. In response to receiving the coolant supplement request packet, the charging pile 500 controls the coolant supplement channel M2 to be connected. In this way, the coolant stored in the first coolant storage tank 521 may flow out from the first coolant outlet 5211 of the first coolant storage tank, and flow into the electric vehicle 400 through the coolant channel 5221 and the coolant discharge channel 5231, to supplement the coolant storage tank of the electric vehicle 400 with the coolant.

It should be understood that for related descriptions of sending the coolant supplement request packet by the electric vehicle 400 to the charging pile 500, refer to the related descriptions of the heat dissipation request packet. Details are not described herein again.

In the foregoing technical solution, the charging pile 500 may connect the coolant supplement channel M2 when receiving the coolant supplement request packet sent by the electric vehicle 400, so that the coolant in the first coolant storage tank 521 may flow into the electric vehicle 400 through the coolant supplement channel M2, to supplement the coolant storage tank in the electric vehicle 400 with the coolant. This avoids a case in which the coolant in the coolant storage tank of the electric vehicle 400 is insufficient. In addition, the first coolant storage tank 521 may provide a coolant of a corresponding capacity to the electric vehicle 400 based on the required capacity, indicated by the coolant supplement request packet, of the coolant, so that a coolant supplementation requirement of the electric vehicle 400 can be better met.

It should be understood that supplementing the coolant storage tank in the electric vehicle 400 with a coolant usually needs to be performed at a specified location, for example, at a vehicle sales service store. As a result, in a process of using the electric vehicle, the user needs to periodically detect whether the coolant in the coolant storage tank is insufficient, and go to a specified location to perform coolant supplementation when the coolant in the coolant storage tank is insufficient. The foregoing coolant supplementation process of the coolant storage tank is complex, which affects user experience.

Therefore, in this embodiment of this application, the electric vehicle 400 may meet both a heat dissipation and charging requirement of the power battery 410 and a coolant supplementation requirement of the coolant storage tank in the electric vehicle 400 through the charging pile 500. This improves timeliness of supplementing the coolant storage tank of the electric vehicle 400 with the coolant, and reduces cases in which the electric vehicle 400 performs coolant supplementation at a specified location, to simplify a coolant supplementation process of the coolant storage tank of the electric vehicle 400. In this way, user experience is improved.

The foregoing describes the charging system 30 provided in this embodiment of this application. The following further specifically describes structures of the charging pile 500 and the electric vehicle 400 in the charging system 30 with reference to the accompanying drawings.

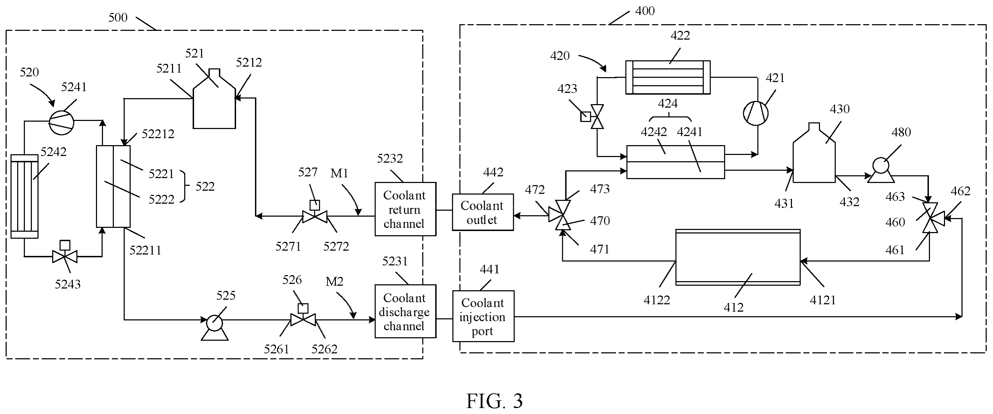

FIG. 3 is a diagram of a specific structure of the charging system 30 shown in FIG. 2 according to an embodiment of this application.

Refer to FIG. 3. In some embodiments, in the charging pile 500, the liquid cooling device 520 further includes a compressor 5241, a second heat exchanger 5242, and an expansion valve 524. The compressor 5241, the second heat exchanger 5242, the expansion valve 5243, and a refrigerant channel 5222 of the first heat exchanger 522 are sequentially connected.

It should be understood that, during specific implementation, the compressor 5241, the second heat exchanger 5242, the expansion valve 5243, and the refrigerant channel 5222 may be connected through a refrigerant pipeline. The refrigerant pipeline is a pipeline used for flowing of a refrigerant, and the refrigerant may be, for example, Freon or a liquid cooling compound.

Based on the foregoing design, the refrigerant may circulate along the compressor 5241, the second heat exchanger 5242, the expansion valve 5243, and the refrigerant channel 5222, to cool the coolant flowing in the coolant channel 5221. In this way, when the heat dissipation channel M1 is connected, the coolant output by the first coolant storage tank 521 may flow into the electric vehicle 400 after cooling through the coolant channel 5221, to absorb heat generated by the power battery 410. Then, the coolant carrying heat in the electric vehicle 400 may flow into the coolant channel 5221 again through the coolant return channel 5232 and the first coolant storage tank 521 to be cooled. In this way, the first heat exchanger 522 dissipates heat for the power battery 410. In addition, when the coolant supplement channel M2 is connected, the coolant output by the first coolant storage tank 521 may flow into the electric vehicle 400 after cooling through the coolant channel 5221, to supplement the coolant storage tank of the electric vehicle 400 with the coolant. This helps avoid a case in which the coolant output by the first coolant storage tank 521 has a high temperature and directly flows into the electric vehicle 400 and consequently a temperature inside the electric vehicle 400 increases.

For example, the first heat exchanger 522 is an evaporator, and the second heat exchanger 5242 is a condenser.

Still refer to FIG. 3. In some embodiments, the liquid cooling device 520 further includes a water pump 525. The water pump 525 is connected between the first coolant outlet 5211 of the first coolant storage tank and the coolant inlet 52212 of the coolant channel, or the water pump 525 is connected between the coolant outlet 52211 of the coolant channel and the coolant discharge channel 5231.

Based on the foregoing design, the water pump 525 may drive the coolant output by the first coolant storage tank 521 to flow into the electric vehicle 400, to dissipate heat for the power battery 410 of the electric vehicle 400 or supplement the coolant storage tank of the electric vehicle 400 with the coolant.

Still refer to FIG. 3. In some embodiments, the liquid cooling device 520 further includes two two-way valves, that is, includes a two-way valve 526 and a two-way valve 527. When the coolant return channel 5232 is connected to the coolant inlet 52212 of the coolant channel through the first coolant storage tank 521, the two-way valve 526 is configured to connect a channel between the coolant outlet 52211 of the coolant channel and the coolant discharge channel 5231, and the two-way valve 527 is configured to connect a channel between the coolant return channel 5232 and the first coolant inlet 5212 of the first coolant storage tank.

Specifically, a first valve port 5261 of the two-way valve in the two-way valve 526 is connected to the coolant outlet 52211 of the coolant channel, and a second valve port 5262 of the two-way valve in the two-way valve 526 is connected to the coolant discharge channel 5231. A first valve port 5271 of the two-way valve in the two-way valve 527 is connected to the first coolant inlet 5212 of the first coolant storage tank, and a second valve port 5272 of the two-way valve in the two-way valve 527 is connected to the coolant return channel 5232.

Based on the foregoing design, the charging pile 500 may adjust a connected/disconnected state between the two valve ports of the two-way valve 526 and a connected/disconnected state between the two valve ports of the two-way valve 527, so that the heat dissipation channel M1 between the coolant discharge channel 5231, the coolant channel 5221, and the coolant return channel 5232 is connected, or the coolant supplement channel M2 between the first coolant outlet 5211 of the first coolant storage tank and the coolant discharge channel 5231 is connected. For example, when receiving the heat dissipation request packet, the charging pile 500 may connect a channel between the two valve ports in the two-way valve 526 and connect a channel between the two valve ports in the two-way valve 527, to connect the heat dissipation channel M1. Alternatively, when receiving the coolant supplement request packet, the charging pile 500 may connect the channel between the two valve ports in the two-way valve 526, to connect the coolant supplement channel M2. In this way, a heat dissipation requirement or a coolant supplementation requirement of the electric vehicle can be met.

For example, the two-way valve 526 and the two-way valve 527 may be solenoid valves.

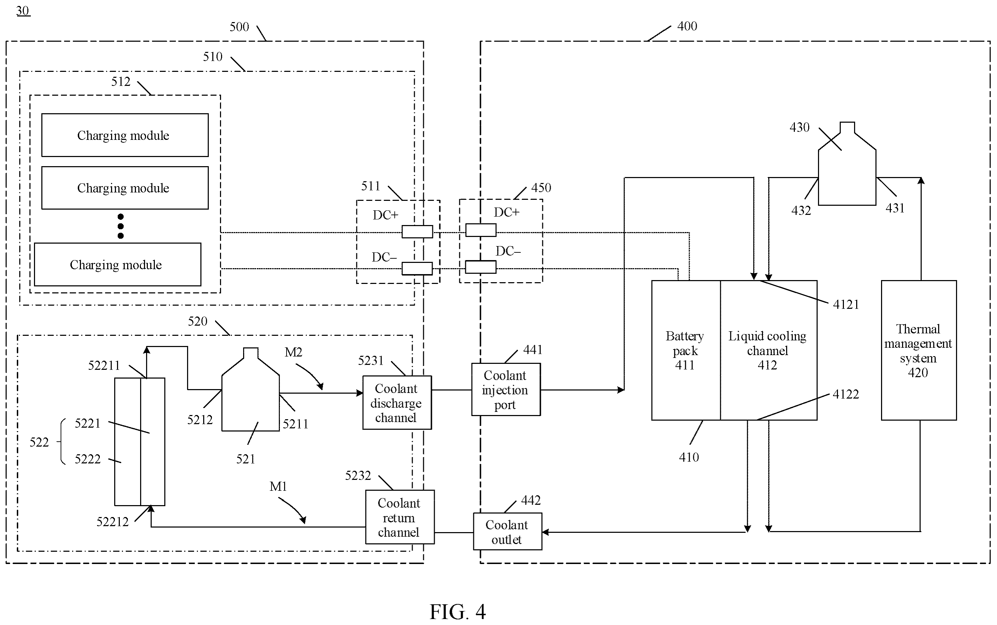

FIG. 4 is a diagram of a structure of another charging system 30 according to an embodiment of this application. It should be noted that, for ease of understanding, in FIG. 4, a dashed connection line represents a power transmission line, and a solid connection line represents a pipeline connection line used for circulation of a coolant, refrigerant, and the like.

A case in the charging pile 500 shown in FIG. 4 is different from a case in which the coolant return channel 5232 shown in FIG. 2 and FIG. 3 is connected to the coolant inlet 52212 of the coolant channel through the first coolant storage tank 521 in that the coolant outlet 52211 of the coolant channel is connected to the coolant discharge channel 5231 through the first coolant storage tank 521. The first coolant inlet 5212 of the first coolant storage tank is connected to the coolant outlet 52211 of the coolant channel, and the coolant outlet 5211 of the first coolant storage tank is connected to the coolant discharge channel 5231 to form the coolant supplement channel M2.

Based on the foregoing design, the first coolant storage tank 521 may be connected in series to the heat dissipation channel M1 between the coolant discharge channel 5231 and the coolant return channel 5232, so that the coolant storage tank 521 is used as a cooling storage water tank of the heat dissipation channel M1. In this way, the cooled coolant in the coolant channel 5221 may flow into the first coolant storage tank 521 in advance for storage, and when heat of the power battery 410 of the electric vehicle 400 needs to be dissipated, the coolant that is stored in the first coolant storage tank 521 and that has a low temperature may flow into the electric vehicle 400 quickly through the coolant discharge channel 5231, to improve efficiency of dissipating heat for the power battery 410 of the electric vehicle 400.

In addition, the coolant supplement channel M2 may include a channel connected between the first coolant outlet 5211 of the first coolant storage tank and the coolant discharge channel 5231. In other words, a part of the heat dissipation channel M1 is used as the coolant supplement channel M2. In this way, when the first coolant storage tank 521 does not need to be separately provided with a coolant discharge port to be connected to the coolant discharge channel 5231, the charging pile 500 can supplement the coolant storage tank of the electric vehicle 400 with the coolant. This helps reduce complexity of channel design in the charging pile 500.

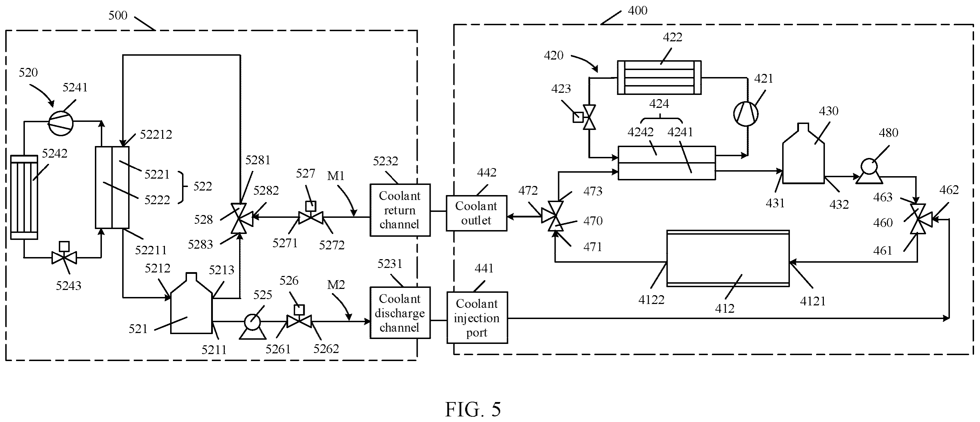

FIG. 5 is a diagram of a specific structure of the charging system 30 shown in FIG. 4 according to an embodiment of this application.

Refer to FIG. 5. In some embodiments, when the coolant outlet 52211 of the coolant channel is connected to the coolant discharge channel 5231 through the first coolant storage tank 521, the two-way valve 526 is configured to connect a channel between the first coolant outlet 5211 of the first coolant storage tank and the coolant discharge channel 5231, and the two-way valve 527 is configured to connect a channel between the coolant return channel 5232 and the coolant inlet 52212 of the coolant channel.

Specifically, the first valve port 5261 of the two-way valve in the two-way valve 526 is connected to the first coolant outlet 5211 of the first coolant storage tank, and the second valve port 5262 of the two-way valve in the two-way valve 526 is connected to the coolant discharge channel 5231. The first valve port 5271 of the two-way valve in the two-way valve 527 is connected to the coolant inlet 52212 of the coolant channel, and the second valve port 5272 of the two-way valve in the two-way valve 527 is connected to the coolant return channel 5232.

Based on the foregoing design, the charging pile 500 may adjust the connected/disconnected state between the two valve ports of the two-way valve 526 and the connected/disconnected state between the two valve ports of the two-way valve 527, so that the heat dissipation channel M1 or the coolant supplement channel M2 is connected. For specific descriptions, refer to the related descriptions in the embodiment shown in FIG. 3. Details are not described herein again.

Still refer to FIG. 5. In some embodiments, the charging pile 500 is further configured to: when receiving the coolant supplement request packet, control the compressor 5241 to stop working.

Specifically, when the coolant outlet 52211 of the coolant channel is connected to the coolant discharge channel 5231 through the first coolant storage tank 521, because the coolant flowing out of the first coolant outlet 5211 of the first coolant storage tank may directly flow into the electric vehicle without passing through the coolant channel 5221, the charging pile 500 may turn off the compressor 5241 when supplementing the coolant storage tank of the electric vehicle 400 with the coolant, to stop cooling the coolant in the coolant channel 5221. This helps reduce energy consumption of the charging pile 500.

Still refer to FIG. 5. In some embodiments, a second coolant outlet 5213 of the first coolant storage tank is connected to the coolant inlet 52212 of the coolant channel.

Based on the foregoing design, the first coolant storage tank 521 may form a cooling circulation loop with the coolant channel 5221 through the first coolant inlet 5212 of the first coolant storage tank and the second coolant outlet 5213 of the first coolant storage tank. In this way, the coolant circulates between the first coolant storage tank 521 and the coolant channel 5221, so that the first heat exchanger 522 can cool the coolant in the first coolant storage tank 521.

Specifically, when the first coolant storage tank 521 does not output the coolant to the coolant discharge channel 5231, the coolant in the first coolant storage tank 521 may flow into the coolant channel 5221 through the second coolant outlet 5213 of the first coolant storage tank to be cooled, and then flow back to the first coolant storage tank 521 through the first coolant inlet 5212 of the first coolant storage tank. In this way, the coolant in the first coolant storage tank 521 can maintain at a low temperature, to improve a cooling storage capability of the first coolant storage tank 521. This helps improve timeliness and effect of dissipating heat for the power battery 410 of the electric vehicle 400 by the charging pile 500.

During specific implementation, in some embodiments, as shown in FIG. 5, the liquid cooling device 520 further includes a three-way valve 528. A first valve port 5281 of the three-way valve is connected to the coolant inlet 52212 of the coolant channel, a second valve port 5282 of the three-way valve is connected to the coolant return channel 5232, and a third valve port 5283 of the three-way valve is connected to the second coolant outlet 5213 of the first coolant storage tank.

Based on the foregoing design, connected/disconnected states between different valve ports of the three-way valve 528 may be adjusted, to switch a flow channel of the coolant, so that the refrigerant channel 5222 performs heat exchange with the coolant flowing out of the electric vehicle 400, or the refrigerant channel 5222 performs heat exchange with the coolant flowing out of the first coolant storage tank 521.

For example, in an example, the three-way valve 528 is configured to: when no coolant is output from the first coolant outlet 5211 of the first coolant storage tank, connect a channel between the second coolant outlet 5213 of the first coolant storage tank and the coolant inlet 52212 of the coolant channel.

Specifically, when the first coolant storage tank 521 does not provide the coolant to the electric vehicle 400, the charging pile 500 may connect a channel between the first valve port 5281 of the three-way valve and the third valve port 5283 of the three-way valve, and disconnect a channel between the first valve port 5281 of the three-way valve and the second valve port 5282 of the three-way valve. In this way, the coolant channel 5221 may cool the coolant in the first coolant storage tank 521, to help improve a cooling storage capability of the first coolant storage tank 521.

In another example, the three-way valve 528 is configured to: when the charging connector 511 outputs electric energy to the electric vehicle 400, and the first coolant outlet 5211 of the first coolant storage tank outputs the coolant, connect the channel between the coolant return channel 5232 and the coolant inlet 52212 of the coolant channel.

Specifically, when the charging pile 500 charges the power battery 410 of the electric vehicle 400, the first coolant storage tank 521 provides the coolant to the electric vehicle 400 to dissipate heat for the power battery 410. In this case, the charging pile 500 may connect the channel between the first valve port 5281 of the three-way valve and the second valve port 5282 of the three-way valve, and disconnect the channel between the first valve port 5281 of the three-way valve and the third valve port 5283 of the three-way valve. In this way, the refrigerant channel 5222 performs heat exchange with only the coolant flowing out of the electric vehicle 400, to help improve efficiency of dissipating heat for the power battery 410 of the electric vehicle 400 by the first heat exchanger 522.

The foregoing describes a specific structure of the charging pile 500 in the charging system 30, and the following describes a specific structure of the electric vehicle 400 in the charging system 30.

With reference to FIG. 2 to FIG. 5, in some embodiments, the electric vehicle 400 further includes a thermal management system 420, and the power battery 410 further includes a liquid cooling channel 412. The liquid cooling channel 412 is configured to perform heat exchange with the battery pack 411, and the thermal management system 420 is configured to cool the coolant flowing out of the liquid cooling channel 412. A coolant outlet of the thermal management system 420 is connected to a coolant inlet 4121 of the liquid cooling channel, and a coolant outlet 4122 of the liquid cooling channel is connected to a coolant inlet of the thermal management system 420.

Based on the foregoing design, an in-vehicle cooling loop may be formed between the liquid cooling channel 412 and the thermal management system 420, so that the coolant may circulate between the liquid cooling channel 412 and the thermal management system 420 through the in-vehicle cooling loop. In this way, during actual application, after absorbing heat generated by the battery pack 411 in the liquid cooling channel 412, the coolant may flow into the thermal management system 420 to be cooled, and the cooled coolant may flow into the liquid cooling channel 412 again, so that the thermal management system 420 dissipates heat for the power battery 410.

For example, the liquid cooling channel 412 may be a liquid cooling plate having a coolant passage, or an immersion heat exchanger. It should be understood that the specific structure of the liquid cooling channel 412 is merely an example. In this embodiment of this application, the coolant can flow in the liquid cooling channel 412, and heat exchange with the battery pack 411 can be implemented.

In some embodiments, the coolant inlet 4121 of the liquid cooling channel is further connected to the coolant injection port 441 of the electric vehicle, and the coolant outlet 4122 of the liquid cooling channel is further connected to the coolant outlet 442 of the electric vehicle.

Based on the foregoing design, when the coolant injection port 441 of the electric vehicle communicates with the coolant discharge channel 5231, and the coolant outlet 442 of the electric vehicle communicates with the coolant return channel 5232, the liquid cooling channel 412 may be connected to the coolant channel 5221 of the first heat exchanger 522 in the charging pile 500 to form an off-vehicle cooling loop, so that the coolant in the charging pile 500 can circulate between the coolant channel 5221 and the liquid cooling channel 412 through the off-vehicle cooling loop. In this way, during actual application, the coolant output by the coolant channel 5221 may flow into the liquid cooling channel 412 through the coolant injection port 441 of the electric vehicle, to absorb heat of the battery pack 411. The coolant after absorbing heat may flow out of the liquid cooling channel 412, and flow back to the coolant channel 5221 through the coolant outlet 442 of the electric vehicle. In this way, the first heat exchanger 522 in the charging pile 500 dissipates heat for the power battery 410.

Still with reference to FIG. 2 to FIG. 5, in some embodiments, the electric vehicle 400 further includes a second coolant storage tank 430. The second coolant storage tank 430 is configured to provide a coolant for an in-vehicle passage in the electric vehicle 400, for example, configured to provide the coolant for the in-vehicle cooling loop between the liquid cooling channel 412 and the thermal management system 420. In addition, the second coolant storage tank 430 is further configured to receive the coolant from the charging pile 500 through the coolant outlet 442.

For example, as shown in FIG. 2 and FIG. 4, the coolant outlet of the thermal management system 420 is connected to the coolant inlet 4121 of the liquid cooling channel through the second coolant storage tank 430. A coolant inlet 431 of the second coolant storage tank is connected to the coolant outlet of the thermal management system 420, and a coolant outlet 432 of the second coolant storage tank is connected to the coolant inlet 4121 of the liquid cooling channel.

Based on the foregoing design, the second coolant storage tank 430 may be connected in series to the in-vehicle cooling loop between the liquid cooling channel 412 and the thermal management system 420, so that the second coolant storage tank 430 is used as a water supply water tank and a water return water tank of the in-vehicle cooling loop. In this way, when the in-vehicle cooling loop between the liquid cooling channel 412 and the thermal management system 420 is connected, the coolant in the second coolant storage tank 430 may circulate between the second coolant storage tank 430, the liquid cooling channel 412, and the thermal management system 420, so that the thermal management system 420 dissipates heat for the power battery 410 by using the coolant provided by the second coolant storage tank 430.

In addition, because the coolant inlet 4121 of the liquid cooling channel is further connected to the coolant injection port 441 of the electric vehicle, the coolant inlet 431 of the second coolant storage tank may be connected to the coolant injection port 441 of the electric vehicle through the thermal management system 420 and the liquid cooling channel 412, to form an off-vehicle coolant supplement channel of the second coolant storage tank 430. In this way, when the coolant injection port 441 of the electric vehicle communicates with the coolant discharge channel 5231, the coolant output by the first coolant storage tank 521 in the charging pile 500 may be delivered to the coolant inlet 431 of the second coolant storage tank through the coolant injection port 441, the liquid cooling channel 412, and the thermal management system 420 of the electric vehicle, so that the first coolant storage tank 521 in the charging pile 500 supplements the second coolant storage tank 430 of the electric vehicle 400 with the coolant.

It should be understood that, that the coolant outlet of the thermal management system 420 is connected to the coolant inlet 4121 of the liquid cooling channel through the second coolant storage tank 430 is merely an example, and is not a limitation on this application. For example, in some other embodiments, the coolant outlet 4122 of the liquid cooling channel is connected to the coolant inlet of the thermal management system 420 through the second coolant storage tank 430. The coolant inlet 431 of the second coolant storage tank is connected to the coolant outlet 4122 of the liquid cooling channel, and the coolant outlet 432 of the second coolant storage tank is connected to the coolant inlet of the thermal management system 420. In addition, the coolant inlet 431 of the second coolant storage tank is connected to the coolant injection port 441 of the electric vehicle through the liquid cooling channel 412, to form the off-vehicle coolant supplement channel of the second coolant storage tank 430.

The following further describes a specific structure of the thermal management system 420 in the electric vehicle 400.

With reference to FIG. 3 and FIG. 5, in some embodiments, the thermal management system 420 includes a compressor 421, a heat exchanger 422, an expansion valve 423, and a heat exchanger 424 that are sequentially connected. The heat exchanger 424 includes a coolant channel 4241 and a refrigerant channel 4242, and the refrigerant channel 4242 is configured to perform heat exchange with the coolant channel 4241. The refrigerant channel 4242 is connected between the compressor 421 and the expansion valve 423.

In addition, a coolant outlet of the coolant channel 4241 is used as the coolant outlet of the thermal management system 420 and is connected to the coolant inlet 431 of the second coolant storage tank, and a coolant inlet of the coolant channel 4241 is used as the coolant inlet of the thermal management system 420 and is connected to the coolant outlet 4122 of the liquid cooling channel. In other words, the in-vehicle cooling loop is formed between the liquid cooling channel 412 and the coolant channel 4241.

Based on the foregoing design, a refrigerant may circulate along the compressor 421, the heat exchanger 422, the expansion valve 423, and the refrigerant channel 4242, to cool the coolant flowing in the coolant channel 4241, so that the thermal management system 420 dissipates heat for the power battery 410.

For specific descriptions of the thermal management system 420, refer to related descriptions of the compressor 5241, the second heat exchanger 5242, the expansion valve 5243, and the first heat exchanger 522 in the charging pile 500. Details are not described herein again.

Still with reference to FIG. 3 and FIG. 5, in some embodiments, the electric vehicle 400 further includes a water pump 480. The water pump 480 is connected between the coolant outlet of the coolant channel 4241 and the coolant inlet 4121 of the liquid cooling channel, or the water pump 480 is connected between the coolant inlet of the coolant channel 4241 and the coolant outlet 4122 of the liquid cooling channel. In this way, the water pump 480 may be used to drive the coolant output by the second coolant storage tank 430 to circulate in the in-vehicle cooling loop between the liquid cooling channel 412 and the coolant channel 4241, so that the thermal management system 420 dissipates heat for the power battery 410.

Still with reference to FIG. 3 and FIG. 5, in some embodiments, the electric vehicle 400 further includes two three-way valves, that is, includes a three-way valve 460 and a three-way valve 470. For the three-way valve 460, a first valve port 461 of the three-way valve is connected to the coolant inlet 4121 of the liquid cooling channel, a second valve port 462 of the three-way valve is connected to the coolant injection port 441 of the electric vehicle, and a third valve port 463 of the three-way valve is connected to the coolant outlet 432 of the second coolant storage tank. For the three-way valve 470, a first valve port 471 of the three-way valve is connected to the coolant outlet 4122 of the liquid cooling channel, a second valve port 472 of the three-way valve is connected to the coolant outlet 442 of the electric vehicle, and a third valve port 473 of the three-way valve is connected to the coolant inlet of the coolant channel 4241.

Based on the foregoing design, connected/disconnected states between different valve ports of each of the three-way valve 460 and the three-way valve 470 are adjusted. In this way, a flow channel of the coolant in the liquid cooling channel 412 can be switched, so that the in-vehicle cooling loop between the liquid cooling channel 412 and the coolant channel 4241 is connected, or the liquid cooling channel 412 is connected to the coolant injection port 441 of the electric vehicle and the coolant outlet 442 of the electric vehicle, to connect the off-vehicle cooling loop between the liquid cooling channel 412 and the first heat exchanger 522. In addition, a connected/disconnected state of the off-vehicle coolant supplement channel between the first coolant inlet 431 of the second coolant storage tank and the coolant injection port 441 of the electric vehicle can be further adjusted, to meet different requirements of the electric vehicle 400.

The following uses the charging system 30 shown in FIG. 5 as an example to describe a specific process of adjusting the connected/disconnected states between the different valve ports of each of the three-way valve 460 and the three-way valve 470 mentioned above.

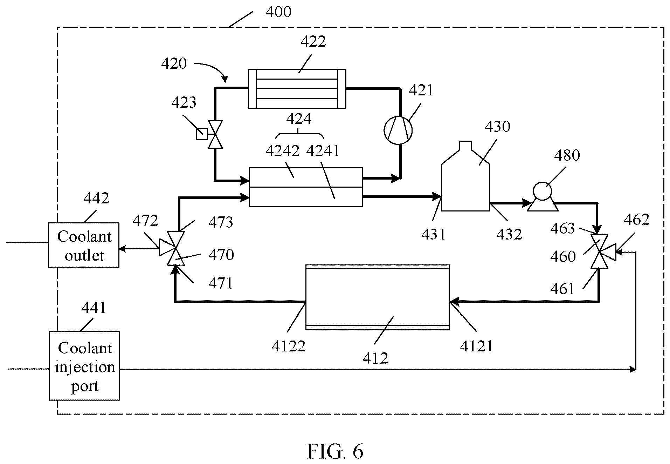

FIG. 6 is a diagram of a heat dissipation principle of the power battery 410 in the electric vehicle 400 shown in FIG. 5 according to an embodiment of this application.

Refer to FIG. 6. In some embodiments, when the coolant injection port 441 and the coolant return port 442 of the electric vehicle 400 are not connected to the charging pile 500, for example, when the electric vehicle 400 is in a normal traveling process, the three-way valve 460 is configured to connect a channel between the coolant inlet 4121 of the liquid cooling channel and the coolant outlet 432 of the second coolant storage tank, and the three-way valve 470 is configured to connect a channel between the coolant outlet 4122 of the liquid cooling channel and the coolant inlet of the coolant channel 4241, so that the electric vehicle 400 dissipates heat for the power battery 410 through the in-vehicle cooling loop that includes the liquid cooling channel 412 and the coolant channel 4241.

Specifically, the electric vehicle 400 may control a channel between the first valve port 461 of the three-way valve in the three-way valve 460 and the third valve port 463 of the three-way valve to be connected, and a channel between the first valve port 461 of the three-way valve and the second valve port 462 of the three-way valve to be disconnected, and further control a channel between the first valve port 471 of the three-way valve in the three-way valve 470 and the third valve port 473 of the three-way valve to be connected, and a channel between the first valve port 471 of the three-way valve and the second valve port 472 of the three-way valve to be disconnected. In this way, the coolant inlet 4121 of the liquid cooling channel communicates with the coolant inlet of the coolant channel 4241 through the three-way valve 460.

Based on the foregoing design, the coolant may circulate between the liquid cooling channel 412 and the coolant channel 4241, so that the thermal management system 420 dissipates heat for the power battery 410.

When the thermal management system 420 dissipates heat for the power battery 410, a flow direction of the coolant and the refrigerant in the electric vehicle 400 is shown by bold line arrows in FIG. 6.

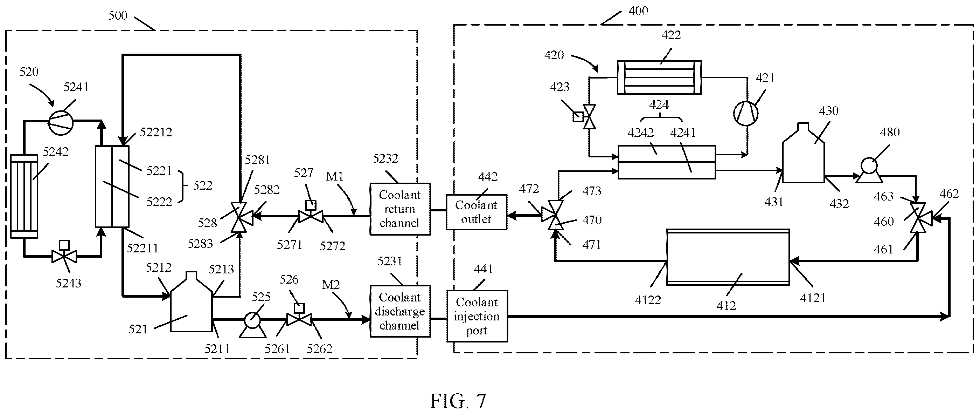

FIG. 7 is a diagram of another heat dissipation principle of the power battery 410 in the electric vehicle 400 shown in FIG. 5 according to an embodiment of this application.

Refer to FIG. 7. In some embodiments, the coolant injection port 441 of the electric vehicle communicates with the coolant discharge channel 5231 of the charging pile 500, the coolant outlet 442 of the electric vehicle communicates with the coolant return channel 5232 of the charging pile 500, and before charging of the power battery 410 starts, the three-way valve 460 is configured to connect a channel between the coolant inlet 4121 of the liquid cooling channel and the coolant injection port 441 of the electric vehicle, and the three-way valve 470 is configured to connect a channel between the coolant outlet 4122 of the liquid cooling channel and the coolant outlet 442 of the electric vehicle, so that in a subsequent charging process of the power battery 410, the electric vehicle 400 may dissipate heat for the power battery 410 through the off-vehicle cooling loop that includes the liquid cooling channel 412 and the coolant channel 5221 of the first heat exchanger 522.

Specifically, before the charging pile 500 starts to charge the power battery 410, when it is determined that the coolant injection port 441 of the electric vehicle communicates with the coolant discharge channel 5231 of the charging pile 500, and the coolant outlet 442 of the electric vehicle communicates with the coolant return channel 5232 of the charging pile 500, the electric vehicle 400 may control the channel between the first valve port 461 of the three-way valve in the three-way valve 460 and the second valve port 462 of the three-way valve to be connected, and the channel between the first valve port 461 of the three-way valve and the third valve port 463 of the three-way valve to be disconnected, and further control the channel between the first valve port 471 of the three-way valve in the three-way valve 470 and the second valve port 472 of the three-way valve to be connected, and the channel between the first valve port 471 of the three-way valve and the third valve port 473 of the three-way valve to be disconnected. In this way, the off-vehicle cooling loop between the liquid cooling channel 412 and the coolant channel 5221 is connected.

Based on the foregoing design, when the power battery 410 starts to perform high-power fast charging through the charging pile 500, the coolant provided by the coolant channel 5221 may circulate between the coolant channel 5221 and the liquid cooling channel 412 through the off-vehicle cooling loop, so that the first heat exchanger 522 in the charging pile 500 dissipates heat for the power battery 410. Further, this helps meet a heat dissipation requirement of the power battery 410 during high-power fast charging, to improve efficiency and safety of charging the electric vehicle 400 by the charging pile 500.

During specific implementation, in some embodiments, the electric vehicle 400 is configured to: send the heat dissipation request packet to the charging pile 500 when the off-vehicle cooling loop between the liquid cooling channel 412 and the coolant channel 5221 is connected. Correspondingly, when receiving the heat dissipation request packet sent by the electric vehicle 400, the charging pile 500 connects the heat dissipation channel M1. For specific descriptions, refer to the related descriptions shown in FIG. 2 to FIG. 5. Details are not described herein again.

When the first heat exchanger 522 in the charging pile 500 dissipates heat for the power battery 410, a flow direction of the coolant and the refrigerant in the charging pile 500 and the electric vehicle 400 is shown by bold line arrows in FIG. 7.

In some embodiments, the charging pile 500 is further configured to: when the heat dissipation channel M1 is connected, output electric energy to the electric vehicle 400 through the charging connector 511, and disconnect the heat dissipation channel M1 after the charging connector 511 finishes outputting the electric energy to the electric vehicle 400.

Specifically, as shown in FIG. 7, after receiving the heat dissipation request packet sent by the electric vehicle 400, the charging pile 500 first controls the channel between the two valve ports of the two-way valve 526 to be connected and the channel between the two valve ports of the two-way valve 527 to be connected, to connect the heat dissipation channel M1. Then, the charging pile 500 controls the plurality of charging modules 512 to output electric energy to the electric vehicle 400 through the charging connector 511. This can improve reliability of dissipating heat for the power battery 410 in a charging state through the heat dissipation channel M1 by the charging pile 500, to help meet a heat dissipation requirement of the power battery 410 during high-power fast charging.

When the charging pile 500 finishes charging the electric vehicle 400, the charging pile 500 controls the channel between the two valve ports of the two-way valve 526 to be disconnected and the channel between the two valve ports of the two-way valve 527 to be disconnected, to prevent the coolant in the heat dissipation channel M1 from leaking from the coolant discharge channel 5231 and the coolant return channel 5232 when the coolant discharge channel 5231 and the coolant return channel 5232 are disconnected from the electric vehicle 400.

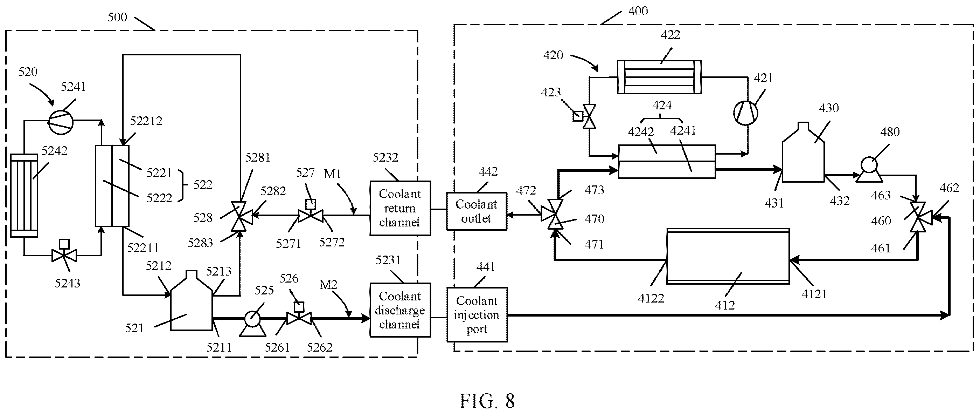

FIG. 8 is a diagram of a coolant supplementation principle of the second coolant storage tank 430 in the electric vehicle 400 shown in FIG. 5 according to an embodiment of this application.

Refer to FIG. 8. In some embodiments, after the coolant injection port 441 of the electric vehicle communicates with the coolant discharge channel 5231 of the charging pile 500, and charging of the power battery 410 ends, the three-way valve 460 is configured to connect the channel between the coolant inlet 4121 of the liquid cooling channel and the coolant injection port 441 of the electric vehicle, and the three-way valve 470 is configured to connect the channel between the coolant outlet 4122 of the liquid cooling channel and the coolant inlet of the coolant channel 4241. In this way, the off-vehicle coolant supplement channel between the coolant injection port 441 of the electric vehicle and the coolant inlet 431 of the second coolant storage tank is connected.

Specifically, after charging of the power battery 410 ends, when it is detected that the second coolant storage tank 430 needs to be supplemented with the coolant, the electric vehicle 400 may control the channel between the first valve port 461 of the three-way valve in the three-way valve 460 and the second valve port 462 of the three-way valve to be connected, and the channel between the first valve port 461 of the three-way valve and the third valve port 463 of the three-way valve to be disconnected, and control the channel between the first valve port 471 of the three-way valve in the three-way valve 470 and the third valve port 473 of the three-way valve to be connected, and the channel between the first valve port 471 of the three-way valve and the second valve port 472 of the three-way valve to be disconnected.

Based on the foregoing design, the coolant provided by the first coolant storage tank 521 in the charging pile 500 may be delivered to the coolant inlet 431 of the second coolant storage tank through the coolant injection port 441, the three-way valve 460, the liquid cooling channel 412, and the coolant channel 4241 of the electric vehicle, so that the charging pile 500 supplements the second coolant storage tank 430 with the coolant.

During specific implementation, in some embodiments, the electric vehicle 400 is further configured to: when the off-vehicle coolant supplement channel between the coolant injection port 441 of the electric vehicle and the coolant inlet 431 of the second coolant storage tank is connected, send the coolant supplement request packet to the charging pile 500. Correspondingly, when receiving the coolant supplement request packet sent by the electric vehicle 400, the charging pile 500 connects the coolant supplement channel M2. For example, after receiving the coolant supplement request packet, the charging pile 500 may control the channel between the two valve ports of the two-way valve 526 to be connected, to connect the coolant supplement channel M2. For specific descriptions, refer to the related descriptions shown in FIG. 2 to FIG. 5. Details are not described herein again.

When the first coolant storage tank 521 of the charging pile 500 supplements the second coolant storage tank 430 of the electric vehicle 400 with the coolant, a flow direction of the coolant in the charging pile 500 and the electric vehicle 400 is shown by bold line arrows in FIG. 8.

Further, in an example, if the coolant supplement request packet sent by the electric vehicle 400 includes a packet indicating a capacity, required by the electric vehicle 400, of the coolant of the charging pile 500, the charging pile 500 may disconnect the coolant supplement channel M2 after outputting the capacity, indicated by the packet, of the coolant, to stop supplementing the second coolant storage tank 430 with the coolant.

The following further describes another structure in the charging system 30.

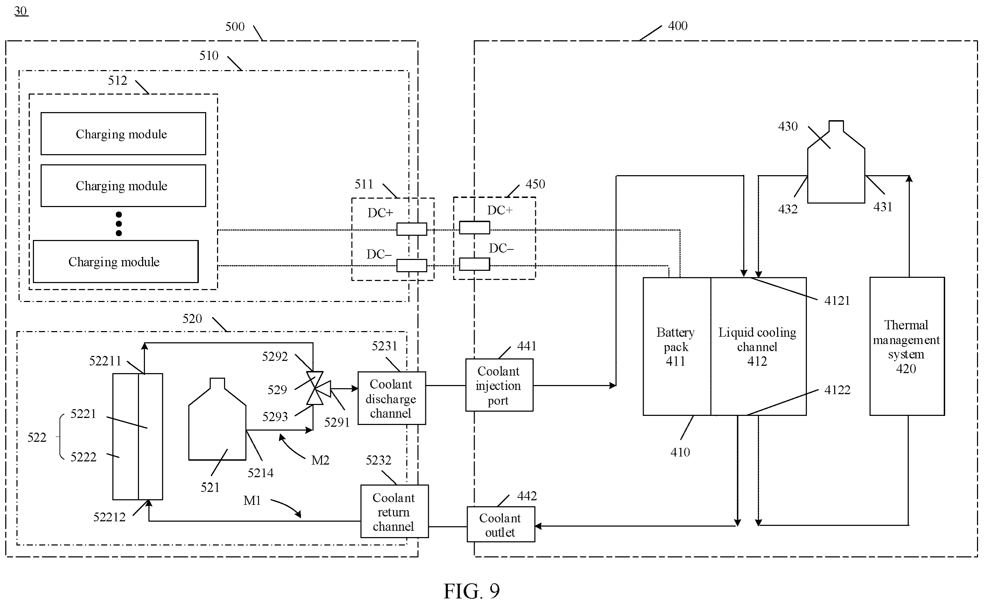

FIG. 9 is a diagram of a structure of still another charging system 30 according to an embodiment of this application.

The embodiment shown in FIG. 9 is different from the charging pile 500 shown in FIG. 2 to FIG. 8 in which the first coolant storage tank 521 and the coolant channel 5221 of the first heat exchanger 522 are connected in series in that the first coolant storage tank 521 and the first heat exchanger 522 are separately disposed.

Specifically, in some embodiments, as shown in FIG. 9, the liquid cooling device 520 further includes a three-way valve 529. A coolant discharge port 5214 of the first coolant storage tank is connected to the coolant discharge channel 5231 through the three-way valve 529, to form the coolant supplement channel M2. The three-way valve 529 is configured to connect the channel between the coolant outlet 52211 of the coolant channel and the coolant discharge channel 5231, or the three-way valve 529 is configured to connect a channel between the coolant discharge port 5214 of the first coolant storage tank and the coolant discharge channel 5231.

A first valve port 5291 of the three-way valve is connected to the coolant discharge channel 5231, a second valve port 5292 of the three-way valve is connected to the coolant outlet 52211 of the coolant channel, and a third valve port 5293 of the three-way valve is connected to the coolant discharge port 5214 of the first coolant storage tank. In other words, the coolant supplement channel M2 includes a channel connected between the coolant discharge port 5214 of the first coolant storage tank and the third valve port 5293 of the three-way valve, and a channel connected between the first valve port 5291 of the three-way valve and the coolant discharge channel 5231.

Based on the foregoing design, the coolant discharge port 5214 of the first coolant storage tank and the coolant outlet 52211 of the coolant channel of the first heat exchanger 522 are separately connected to the coolant discharge channel 5231 through the three-way valve 529. In this way, during actual application, connected/disconnected states between different valve ports of the three-way valve 529 are adjusted, so that the coolant discharge channel 5231 may deliver the coolant flowing out of the coolant discharge port 5214 of the first coolant storage tank to the electric vehicle 400, or the coolant discharge channel 5231 delivers the coolant flowing out of the coolant channel 5221 to the electric vehicle 400. This helps ensure that supplementing the second coolant storage tank 430 of the electric vehicle with the coolant by the first coolant storage tank 521 and dissipating heat for the power battery 410 of the electric vehicle 400 by the first heat exchanger 522 are separately performed, to improve reliability of heat dissipation and coolant supplementation performed by the charging pile 500 on the electric vehicle 400.

In addition, because the first coolant storage tank 521 and the first heat exchanger 522 are separately disposed, when the first coolant storage tank 521 supplements the electric vehicle 400 with the coolant, the compressor configured to cool the coolant flowing in the first heat exchanger 522, the water pump configured to drive the coolant to flow in the first heat exchanger 522, and the like in the charging pile 500 may be in a shutdown state. This helps reduce energy consumption of the charging pile 500.

For example, in some embodiments, with reference to FIG. 3 and FIG. 9, when the coolant discharge port 5214 of the first coolant storage tank is connected to the coolant discharge channel 5231 through the three-way valve 529 to form the coolant supplement channel M2, the charging pile 500 is further configured to: when receiving the coolant supplement request packet, control the compressor 5241 to stop working. This helps reduce energy consumption of the charging pile 500.

It should be understood that for descriptions of the charging system 30 shown in FIG. 9 that are not provided in detail, refer to related descriptions in embodiments shown in FIG. 2 to FIG. 8. Details are not described herein again.

An embodiment of this application further provides a liquid cooling device, where the liquid cooling device includes a coolant storage tank, a first heat exchanger, a coolant discharge channel, a coolant return channel, a heat dissipation channel, and a coolant supplement channel, and the first heat exchanger includes a coolant channel. The coolant discharge channel is configured to communicate with a coolant injection port of the electric vehicle, and the coolant return channel is configured to communicate with a coolant outlet of the electric vehicle. The liquid cooling device is configured to: when the coolant discharge channel communicates with the coolant injection port of the electric vehicle, the coolant return channel communicates with the coolant outlet of the electric vehicle, and a heat dissipation request packet sent by the electric vehicle is received, connect the heat dissipation channel. The heat dissipation channel is configured to deliver, to the electric vehicle through the coolant discharge channel, a coolant flowing out of the coolant channel, and deliver, to the coolant channel through the coolant return channel, a coolant flowing out of the electric vehicle. The heat dissipation request packet includes at least one of the following packets: a packet indicating the liquid cooling device to dissipate heat for the electric vehicle, a packet indicating a flow rate, required by the electric vehicle, of a coolant of the liquid cooling device, or a packet indicating a temperature, required by the electric vehicle, of the coolant of the liquid cooling device. The liquid cooling device is further configured to: when the coolant discharge channel communicates with the coolant injection port of the electric vehicle, and a coolant supplement request packet sent by the electric vehicle is received, connect the coolant supplement channel. The coolant supplement channel is configured to deliver, to the electric vehicle through the coolant discharge channel, a coolant flowing out of the coolant storage tank. The coolant supplement request packet includes at least one of the following packets: a packet indicating the liquid cooling device to supplement the electric vehicle with a coolant, or a packet indicating a capacity that is required by the electric vehicle and that is of the coolant of the liquid cooling device.

It should be understood that for specific descriptions of the liquid cooling device, refer to related descriptions of the liquid cooling device 520 in embodiments shown in FIG. 2 to FIG. 9. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging pile, wherein the charging pile comprises a charging connector, a coolant storage tank, a first heat exchanger, a coolant discharge channel, a coolant return channel, a heat dissipation channel, and a coolant supplement channel, the first heat exchanger comprises a coolant channel, the charging connector is configured to output electric energy to an electric vehicle, the coolant discharge channel is configured to communicate with a coolant injection port of the electric vehicle, and the coolant return channel is configured to communicate with a coolant outlet of the electric vehicle; and
the charging pile is configured to: when the coolant discharge channel communicates with the coolant injection port of the electric vehicle, the coolant return channel communicates with the coolant outlet of the electric vehicle, and a heat dissipation request packet sent by the electric vehicle is received, connect the heat dissipation channel, wherein the heat dissipation channel is configured to deliver, to the electric vehicle through the coolant discharge channel, a coolant flowing out of the coolant channel, and deliver, to the coolant channel through the coolant return channel, a coolant flowing out of the electric vehicle, the heat dissipation request packet comprises at least one of the following packets:
a packet indicating the charging pile to dissipate heat for the electric vehicle, a packet indicating a flow rate that is required by the electric vehicle and that is of a coolant of the charging pile, or a packet indicating a temperature that is required by the electric vehicle and that is of the coolant of the charging pile; and
the charging pile is further configured to: when the coolant discharge channel communicates with the coolant injection port of the electric vehicle and a coolant supplement request packet sent by the electric vehicle is received, connect the coolant supplement channel, wherein the coolant supplement channel is configured to deliver, to the electric vehicle through the coolant discharge channel, a coolant flowing out of the coolant storage tank, and the coolant supplement request packet comprises at least one of the following packets:
a packet indicating the charging pile to supplement the electric vehicle with a coolant, or a packet indicating a capacity that is required by the electric vehicle and that is of the coolant of the charging pile.

2. The charging pile according to claim 1, wherein a coolant outlet of the coolant channel is connected to the coolant discharge channel through the coolant storage tank, wherein a coolant inlet of the coolant storage tank is connected to the coolant outlet of the coolant channel, and a coolant outlet of the coolant storage tank is connected to the coolant discharge channel to form the coolant supplement channel; or
the coolant return channel is connected to a coolant inlet of the coolant channel through the coolant storage tank, wherein a coolant inlet of the coolant storage tank is connected to the coolant return channel, a coolant outlet of the coolant storage tank is connected to the coolant inlet of the coolant channel, and the coolant outlet of the coolant storage tank is connected to the coolant discharge channel through the coolant channel to form the coolant supplement channel.

3. The charging pile according to claim 2, wherein the charging pile comprises two two-way valves; and
when the coolant outlet of the coolant channel is connected to the coolant discharge channel through the coolant storage tank, one of the two-way valves is configured to connect a channel between the coolant outlet of the coolant storage tank and the coolant discharge channel, and the other two-way valve is configured to connect a channel between the coolant return channel and the coolant inlet of the coolant channel; or
when the coolant return channel is connected to the coolant inlet of the coolant channel through the coolant storage tank, the one of the two-way valves is configured to connect a channel between the coolant outlet of the coolant channel and the coolant discharge channel, and the other two-way valve is configured to connect a channel between the coolant return channel and the coolant inlet of the coolant storage tank.

4. The charging pile according to claim 2 or 3, wherein the charging pile further comprises a compressor, an expansion valve, and a second heat exchanger, and the first heat exchanger further comprises a refrigerant channel;
the coolant outlet of the coolant channel is connected to the coolant discharge channel through the coolant storage tank, the compressor, the refrigerant channel, the expansion valve, and the second heat exchanger are sequentially connected, and the refrigerant channel is configured to perform heat exchange with the coolant channel; and
the charging pile is further configured to: when receiving the coolant supplement request packet, control the compressor to stop working.

5. The charging pile according to claim 1, wherein the charging pile further comprises a three-way valve, and a coolant discharge port of the coolant storage tank is connected to the coolant discharge channel through the three-way valve to form the coolant supplement channel; and
the three-way valve is configured to connect a channel between a coolant outlet of the coolant channel and the coolant discharge channel, or the three-way valve is configured to connect a channel between the coolant discharge port of the coolant storage tank and the coolant discharge channel.

6. The charging pile according to claim 5, wherein the charging pile further comprises a compressor, an expansion valve, and a second heat exchanger, and the first heat exchanger further comprises a refrigerant channel;
the compressor, the refrigerant channel, the expansion valve, and the second heat exchanger are sequentially connected, and the refrigerant channel is configured to perform heat exchange with the coolant channel; and
the charging pile is further configured to: when receiving the coolant supplement request packet, control the compressor to stop working.

7. The charging pile according to any one of claims 1 to 6, wherein the charging pile is further configured to:
when the heat dissipation channel is connected, output electric energy to the electric vehicle by using the charging connector; and
disconnect the heat dissipation channel after the charging connector finishes outputting electric energy to the electric vehicle.

8. A liquid cooling device, wherein the liquid cooling device comprises a coolant storage tank, a first heat exchanger, a coolant discharge channel, a coolant return channel, a heat dissipation channel, and a coolant supplement channel, the first heat exchanger comprises a coolant channel, the coolant discharge channel is configured to communicate with a coolant injection port of an electric vehicle, and the coolant return channel is configured to communicate with a coolant outlet of the electric vehicle;
the liquid cooling device is configured to: when the coolant discharge channel communicates with the coolant injection port of the electric vehicle, the coolant return channel communicates with the coolant outlet of the electric vehicle, and a heat dissipation request packet sent by the electric vehicle is received, connect the heat dissipation channel, wherein the heat dissipation channel is configured to deliver, to the electric vehicle through the coolant discharge channel, a coolant flowing out of the coolant channel, and deliver, to the coolant channel through the coolant return channel, a coolant flowing out of the electric vehicle, and the heat dissipation request packet comprises at least one of the following packets:
a packet indicating the liquid cooling device to dissipate heat for the electric vehicle, a packet indicating a flow rate, required by the electric vehicle, of a coolant of the liquid cooling device, or a packet indicating a temperature, required by the electric vehicle, of the coolant of the liquid cooling device; and
the liquid cooling device is further configured to: when the coolant discharge channel communicates with the coolant injection port of the electric vehicle and a coolant supplement request packet sent by the electric vehicle is received, connect the coolant supplement channel, wherein the coolant supplement channel is configured to deliver, to the electric vehicle through the coolant discharge channel, a coolant flowing out of the coolant storage tank, and the coolant supplement request packet comprises at least one of the following packets:
a packet indicating the liquid cooling device to supplement the electric vehicle with a coolant, or a packet indicating a capacity that is required by the electric vehicle and that is of the coolant of the liquid cooling device.

9. The liquid cooling device according to claim 8, wherein a coolant outlet of the coolant channel is connected to the coolant discharge channel through the coolant storage tank, wherein a coolant inlet of the coolant storage tank is connected to the coolant outlet of the coolant channel, and a coolant outlet of the coolant storage tank is connected to the coolant discharge channel to form the coolant supplement channel; or
the coolant return channel is connected to a coolant inlet of the coolant channel through the coolant storage tank, wherein a coolant inlet of the coolant storage tank is connected to the coolant return channel, a coolant outlet of the coolant storage tank is connected to the coolant inlet of the coolant channel, and the coolant outlet of the coolant storage tank is connected to the coolant discharge channel through the coolant channel to form the coolant supplement channel.

10. The liquid cooling device according to claim 9, wherein the liquid cooling device comprises two two-way valves; and
when the coolant outlet of the coolant channel is connected to the coolant discharge channel through the coolant storage tank, one of the two-way valves is configured to connect a channel between the coolant outlet of the coolant storage tank and the coolant discharge channel, and the other two-way valve is configured to connect a channel between the coolant return channel and the coolant inlet of the coolant channel; or
when the coolant return channel is connected to the coolant inlet of the coolant channel through the coolant storage tank, the one of the two-way valves is configured to connect a channel between the coolant outlet of the coolant channel and the coolant discharge channel, and the other two-way valve is configured to connect a channel between the coolant return channel and the coolant inlet of the coolant storage tank.

11. The liquid cooling device according to claim 9 or 10, wherein the liquid cooling device further comprises a compressor, an expansion valve, and a second heat exchanger, and the first heat exchanger further comprises a refrigerant channel;
the coolant outlet of the coolant channel is connected to the coolant discharge channel through the coolant storage tank, the compressor, the refrigerant channel, the expansion valve, and the second heat exchanger are sequentially connected, and the refrigerant channel is configured to perform heat exchange with the coolant channel; and
the liquid cooling device is further configured to: when receiving the coolant supplement request packet, control the compressor to stop working.

12. The liquid cooling device according to claim 8, wherein the liquid cooling device further comprises a three-way valve, and a coolant discharge port of the coolant storage tank is connected to the coolant discharge channel through the three-way valve to form the coolant supplement channel; and
the three-way valve is configured to connect a channel between a coolant outlet of the coolant channel and the coolant discharge channel, or the three-way valve is configured to connect a channel between the coolant discharge port of the coolant storage tank and the coolant discharge channel.

13. The liquid cooling device according to claim 12, wherein the liquid cooling device further comprises a compressor, an expansion valve, and a second heat exchanger, and the first heat exchanger further comprises a refrigerant channel;
the compressor, the refrigerant channel, the expansion valve, and the second heat exchanger are sequentially connected, and the refrigerant channel is configured to perform heat exchange with the coolant channel; and
the liquid cooling device is further configured to: when receiving the coolant supplement request packet, control the compressor to stop working.
